# EUROPEAN PATENT APPLICATION

(11) **EP 2 677 478 A1**
(43) Date of publication of application: **25.12.2013**
(21) Application number: 12173030.3
(22) Date of filing: 21.06.2012
(51) Int. Cl.: G06Q 10/00, H04L 29/08

(54) **Managing use of network resources**

(71) Applicant: BlackBerry Limited, Waterloo, ON N2K 0A7 (CA)
(72) Inventor: Winkler, Michael Thomas, Waterloo, ON N2L 3W8 (CA); Ryerson, Christopher Maybee, Kanata, ON K2K 3K1 (CA); Bender, Christopher Lyle, Waterloo, ON N2L 3W8 (CA); Bukurak, David, Kanata, ON K2K 3K1 (CA); Altman, Benjamin, Mississauga, ON L4W 0B5 (CA)
(74) Representative: Finnie, Peter John

(57) **Abstract**

Some aspects of what is described here relate to managing the use of network resources on a mobile device. User input received at the device indicates whether to allow an application associated with a first perimeter on the device to access a network resource associated with a second perimeter on the device. For example, in some instances user input may indicate whether to allow data from applications associated with a personal perimeter on the device to be transmitted over an enterprise communication system. When outbound data associated with the first perimeter are received, the device determines, according to the indication from the user input, whether to route the outbound data to the network resource associated with the second perimeter.

## Description

### BACKGROUND

This disclosure relates to managing use of network resources on a device. Many communication devices include data, applications, and network resources whose accessibility is controlled by security protocols. For example, user accounts, administration rights, password protection, database management, and others may be managed by or otherwise associated with different entities (*e.g.*, an enterprise, a user).

### DESCRIPTION OF DRAWINGS

FIG. 1 is a schematic diagram showing an example data communication system.

FIG. 2 is a diagram showing an example mobile device.

FIG. 3 is a schematic diagram showing example uses of network resources on a mobile device.

FIG. 4 is a flow chart showing an example technique for managing use of network resources on a mobile device.

FIG. 5 is a flow chart showing an example technique for managing use of corporate network resources on a mobile device.

Like reference symbols in the various drawings indicate like elements.

### DETAILED DESCRIPTION

Perimeters can be used to logically separate information (*e.g.*, data, applications, network resources, etc.) on a user device. In some instances, particular resources are shared among multiple perimeters. For example, a network resource in a first perimeter may be accessible to applications in other perimeters. The user device may include policies for cross-perimeter access that specify rules for individual perimeters, applications, network resources, or any suitable combination.

An administrator of a perimeter may determine which resources of the perimeter can be accessed by other perimeters. For example, a personal perimeter can be managed by the device user, and an enterprise perimeter can be managed by a corporate administrator. The user's personal applications in the personal perimeter can use network resources in the personal perimeter. The user can also choose whether the personal applications can use an enterprise network. For example, due to privacy concerns, a user may not want his or her web browsing information to traverse a corporate network.

In some instances, an enterprise administrator can set rules on what perimeters (at a macro level) or what applications (at a micro level) can use the enterprise networks. For example, due to security concerns, an enterprise administrator may not want a user-installed application (malware or otherwise) to be able to access on-enterprise network resources. But the administrator may trust certain applications (*e.g.*, applications provided by a particular software provider, or applications having certain security features) and allow those applications to access the enterprise network.

A single device may be configured to allow concurrent use for both personal and work purposes, while keeping personal and work traffic separate. Such use can be provided in a convenient manner that requires no user intervention after the initial setup. In some implementations, users can access the Internet through non-corporate networks for personal use without being subject to restrictions imposed by their employer, and without having their traffic subject to being monitored or scrutinized by their employer. Users may also access the Internet or other network resources through corporate networks for work purposes. The device may be configured to ensure enterprise control over the work traffic, and the user can be given control over whether personal traffic is allowed to flow on corporate networks.

A user control can permit the user to either allow or disallow the user's personal traffic on the corporate network. In cases where an employer has decided to allow personal traffic to flow on corporate networks, the user may wish to avoid those networks so that their personal traffic is not subject to employer restrictions or employer inspection. For example, an employer may restrict access to particular websites, or employees may fear that their employer will scrutinize the websites they visit. As such, personal traffic can be segregated from work traffic on the device, and the user can choose whether personal traffic can be sent over the corporate network. In some cases, personal traffic is sent over a personal network while corporate traffic is sent over a corporate network. This solution can provide added convenience and privacy for the user, and greater flexibility on devices that are used for both business and personal purposes.

In an example scenario, a device is connected to a corporate Wi-Fi network. The user may save airtime costs by routing all of their data over the corporate Wi-Fi network (*e.g.*, instead of using a personal data plan). But the user may also be subject to restrictive policies on the corporate Wi-Fi network (*e.g.*, access to certain sites may be restricted). As such, the user may want to route personal data through non-corporate network resources (*e.g.*, a personal mobile data plan), while routing corporate data through corporate network resources. In the example scenario, the user has the ability to decide whether to route personal data traffic over the corporate Wi-Fi network or to use another network for personal data traffic without disabling the corporate Wi-Fi connection. Allowing the user to indicate whether to route personal data over the corporate network may provide greater flexibility.

Accordingly, using the corporate network for personal applications may have certain advantages (*e.g.*, save money, faster network, etc.) while using a personal mobile plan may have other advantages (*e.g.*, greater privacy, unrestricted access to the Internet, etc.). These considerations may be communicated to the user in association with the user's selection. For example, informative messages can be provided before or after the user makes a selection, or the information may be provided concurrently with the control interface.

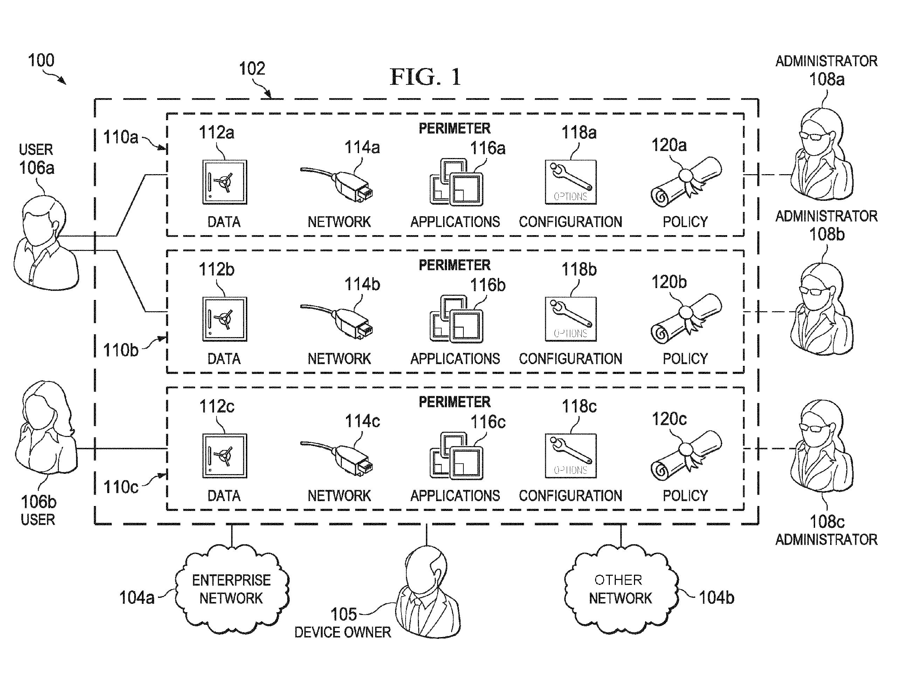

FIG. 1 is a schematic diagram showing an example data communication system 100. The example data communication system 100 includes a device 102, an enterprise network 104a, and other networks 104b. A data communication system may include additional, different, or fewer features, as appropriate. The diagram in FIG. 1 also shows interactions by users 106a, 106b, by a device owner 105, and by administrators 108a, 108b, 108c. In some cases, the device owner 105 can be one of the users 106a or 106b, a business enterprise, or another entity. Additional, different, or fewer entities may interact with a data communication system, as appropriate in various implementations.

The device 102 can be any suitable computing device. Generally, a computing device includes a computer-readable medium and data processing apparatus. The computer-readable medium may include any suitable memory, disc, storage device, or other apparatus configured to store machine-readable information. The computer-readable medium can store instructions that are executable by the data processing apparatus. The data processing apparatus can include any suitable processor, controller, circuitry, or other apparatus configured to perform operations based on machine-readable instructions. The data processing apparatus can include a programmable processor, digital logic circuitry, firmware, or any other suitable device. The computer-readable medium can include a single medium or multiple media, and the data processing apparatus can include a single apparatus or multiple apparatus.

The example device 102 is operable to receive requests from the user via a user interface, such as a graphical user interface or any other suitable user interfaces. As shown in FIG. 1, the device 102 is communicably coupled to the enterprise network 104a and to one or more other networks 104b. The example device 102 is operable to receive, transmit, process and store any appropriate data. For example, the device 102 can be a smartphone, a tablet computer, a personal computer, a laptop computer, a personal data assistant (PDA), or another type of user device. The device 102 may include an input device, such as a keypad, touch screen, mouse, or other device that can accept information, and an output device (*e.g.*, display screen) that conveys information associated with the operation of the resources. Both the input device and output device may include fixed or removable storage media (*e.g.*, memory, etc.) to both receive input from and provide output to users through the display.

As shown in FIG. 1, the device 102 includes three example perimeters 110a, 110b, and 110c (individually and collectively referred to as "perimeters 110"). Each perimeter 110 includes data 112, network access resources 114, one or more applications 116, configuration files 118, and one or more policies 120. A perimeter 110 may include only a subset of the illustrated resources, or a perimeter 110 may include additional or different resources.

The example perimeters 110 can logically separate resources (e.g., applications, data, network access resources, configuration files, etc.) such that resources in a given perimeter can, in some instances, be prevented from accessing resources included in a different perimeter. For example, the perimeters may prevent personal resources in one perimeter from accessing corporate resources in another perimeter, or vice-versa. In some cases, an enterprise may extend a secured perimeter on a single user device without interfering with the user's personal experience on the same device. The perimeters may also permit cross-perimeter access to resources. Access to perimeter resources may be controlled by defining, assigning or otherwise associating a policy to each perimeter.

A policy for a perimeter can be implemented in any suitable format, using any appropriate information. A policy can specify access to both the external resources (in another perimeter) that can be accessed by internal applications (running in the perimeter) and internal resources that can be accessed by external applications. For example, a given perimeter's policy may identify other perimeters that are accessible, internal resources that are not accessible to other perimeters, or both. A perimeter's policy may identify specific users that can or cannot access specified resources in the perimeter. In some implementations, the policies from both perimeters determine whether cross-perimeter access is granted, or, if there is a conflict, the strictest policy can be applied.

A perimeter may refer to a logical separation of computing resources such that transferring data between perimeters and accessing resources of other perimeter can be controlled. Resources may include applications, file systems, network access, or other computer resources. In addition to enabling access to resources within a perimeter, the example data communication system 100 may include a policy that identifies specific external resources that a resource in a perimeter may access. The example data communication system 100 may manage a seamless user experience in which the perimeter concept is executed.

A perimeter 110 may include password protection, encryption, and other process for controlling access to resources assigned to the perimeter. A perimeter 110 may be generated by the device owner, a user, an administrator, or others. In some examples, the perimeter 110a may be a personal perimeter created for the user 106a and managed by the user 106a. In some examples, the perimeter 110b may be an enterprise perimeter created by an administrator 108b for an enterprise and may be managed by a remote management server. In addition, a given perimeter may be accessed by the device owner 105, a user, an administrator, any suitable combination. In some implementations, each perimeter may be associated with a single user, and at least some users may access multiple device perimeters. For example, the first user 106a may access resources within both the perimeter 110a and the perimeter 110b, and the second user 106b may have access to only one perimeter 110c.

In some instances individual perimeters may be added, deleted, or modified. The device owner 105 may have the ability to add or remove individual perimeters 110 from the device 102. In some implementations, a user can create a perimeter. In some instances, an organization associated with the enterprise network 104a can send the device information identifying the initial resources (*e.g.*, applications, policies, configurations, etc.) for a new perimeter. A perimeter administrator may assign policies for the perimeters and initiate perimeter updates. In some implementations, perimeter administrators can remotely lock and/or wipe a perimeter.

Information may be stored on the device 102 in any suitable memory or database module. Example memories include volatile and non-volatile memory, magnetic media, optical media, random access memory (RAM), read-only memory (ROM), removable media and others. The data 112 can include any suitable information. The device 102 can store various objects, including files, classes, frameworks, backup data, business objects, jobs, web pages, web page templates, database tables, repositories storing business and/or dynamic information, and any other appropriate information including any parameters, variables, algorithms, instructions, rules, constraints, or references thereto. The data 112 may include information that is associated with an application, a network, a user, and other information.

The network access resources 114 can include any suitable parameters, variables, policies, algorithms, instructions, settings, or rules for granting access to networks. For example, the network access resources 114a may include or identify firewall policies for accessing the enterprise network 104a. As another example, the network access resources 114b may include or identify account data for accessing one or more of the other networks 104b. In some implementations, network access resources include or otherwise identify one or more of the following: a username; a password; a security token; a Virtual Private Network (VPN) configuration; firewall policies; a communication protocol; encryption key certificate; or others.

The applications 116 can include any suitable program, module, script, process, or other object that can execute, change, delete, generate, or process information. For example, applications can be implemented as Enterprise Java Beans (EJBs). Design-time components may have the ability to generate run-time implementations into different platforms, such as J2EE (Java 2 Platform, Enterprise Edition), ABAP (Advanced Business Application Programming) objects, or Microsoft's .NET. Further, while illustrated as internal to the device 102, one or more processes associated with the applications 116 may be stored, referenced, or executed remotely. For example, a portion of the applications 116 may be an interface to a web service that is remotely executed. Moreover, the applications 116 may be a child or submodule of another software module (not illustrated).

The configuration files 118 can include any suitable parameters, variables, policies, algorithms, instructions, settings, or rules for configuring software of the device 102. For example, the configuration files 118 may include a table that identifies settings for one or more applications 116. In some implementations, the configuration files 118 identify initial settings for one or more applications 116, and for other types of applications such as operating system settings. The configuration files 118 may be written in any suitable format, such as, for example, ASCII and line-oriented, etc.

The policies 120 may include any parameters, variables, policies, algorithms, instructions, settings, or rules for enabling or preventing cross-perimeter access. For example, the policies 120a may identify a resource external to the perimeter 110a that is accessible by a resource inside the perimeter 110a. A policy of a given perimeter may include or otherwise identify the accessibility of the perimeter generally, the accessibility of specific resource in the perimeter, the ability of resources in the perimeter to access other perimeters, and other accessibility information. A policy may specify accessibility by user, action type, time period, or otherwise. In some implementations, a policy may identify specific resources of a perimeter that are accessible to external resources. For example, the policies 120a for the perimeter 110a may indicate that a specific application in another perimeter 110b may or may not access the data or resources in the first perimeter 110a. As another example, the policies 120a for the perimeter 110a may indicate that any of the applications in the other perimeters 110b or 110c may or may not access the data or resources in the first perimeter 110a.

In some implementations, a policies 120 may define or otherwise identify a process for user authentication. For example, the policies 120 may identify the type and content of user authentication (e.g., password strength, lifecycle) to apply to a cross-perimeter request. When a user requests access to multiple perimeters, the request may be evaluated by the policies of both perimeters. In some instances, if both policies grant access, then the cross-perimeter request may be granted. The policies may identify or include information to determine which network access resources can be used by an external resource in a different perimeter.

The device 102 may be connected to multiple networks, such as the enterprise network 104a and the other networks 104b. The enterprise network 104a is a network associated with an enterprise. The enterprise network 104a can include a wireless network, a virtual private network, a wired network, or any suitable network. The enterprise can be a corporate or business entity, a government body, a non-profit institution, or any other organization. The enterprise may be the device owner 105. The enterprise may also lease the device 102 or may hire contractors or agents who are responsible for maintaining, configuring, controlling, or managing the device 102. The other networks 104b can include any suitable networks that are accessible by a user. For example, the other networks can include a public network that the user has an account for, a private network, an ad hoc network, or another type of network. In some cases, the other networks 104b include a cellular data network. In some cases, the other networks 104b include a user's home network.

In some instances, each network is associated with one or more perimeters. For example, the perimeter 110a can be an enterprise perimeter, and the network access resources 114a can provide access to the enterprise network 104a; the perimeter 110b can be a personal perimeter, and the network access resources 114b can provide access to the other networks 104b. As such, all of the applications 116a in the first perimeter 110a can access the enterprise network resources, and all of the applications 116b in the second perimeter 110b can access the other network resources.

In some cases, the policies 120a indicates whether external resources (*e.g.*, applications in the other perimeters 110b and 110c) can access the network resources in the first perimeter 110a, and the policies 120b of the second perimeter 110b indicates whether the applications 116b in the second perimeter 110b can access network resources of the first perimeter 11a. In the example where the first perimeter 110a is an enterprise perimeter and the second perimeter 110b is a personal perimeter, both sets of policies 120a and 120b may be used to determine whether the personal applications 116b can access the enterprise network 104a.

The networks 104a and 104b facilitate communication with the device 102. Either of the networks 104a and 104b may communicate, for example, Internet Protocol (IP) packets, Frame Relay frames, Asynchronous Transfer Mode (ATM) cells, voice, video, data, and other suitable information between network addresses. In addition, while the enterprise network 104a and the other networks 104b are each illustrated as a single network, each network may include multiple networks and may provide access to additional networks. In short, the enterprise network 104a and the other networks 104b may include any suitable network configured to communicate with the device 102.

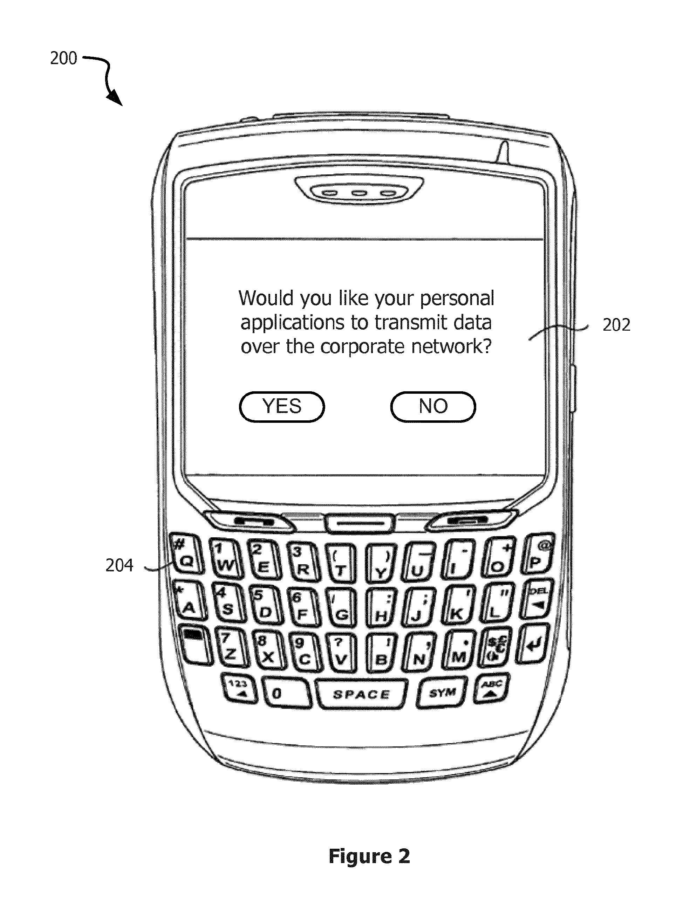

FIG. 2 is a diagram showing an example user device 200. As shown in FIG. 2, a user control may be provided so that the user can indicate whether to allow personal applications to transmit data over a corporate network. The example user device 200 shown in FIG. 2 includes a display 202, a keyboard 204, and additional features. A user device may include additional or different features.

The display 202 can prompt the user to make a selection using the prompt shown in FIG. 2. A different type of prompt-which may include additional or different language, a different format or graphical style, different selectable elements or options, as appropriate-may be used. The display 202 may provide additional or different information as part of the user prompt. In the example shown, the user can select "YES" or "NO" in response to the prompt. For example, the user selection may be provided through a user's interaction with a touchscreen, a keystroke, a stylus or pointing device, or by another type of user action.

In response to the user selection, the user device 200 may modify a policy or setting of the device 200. For example, if the user selects "YES," the device 200 can update a policy to allow applications in a personal perimeter to access corporate network resources; or if the user selects "NO," the device 200 can update a policy to prevent applications in a personal perimeter from accessing corporate network resources. In some instances, the user selection can be stored on the device 200. The device 200 can route data based on the user selection, for example, based on a policy that has been updated in response to the user selection. For example, data traffic associated with personal applications on the device 200 may be routed through the corporate network or through a non-corporate network based on the user selection.

In response to the user selection, the user device 200 may provide additional or different information to the user. For example, if the user selects "YES," the display 202 can inform the user that the user's personal data may be visible by personnel or administrators associated with the corporate entity; or if the user selects "NO," the display 202 can inform the user that the user's may incur personal data charges for any personal data traffic.

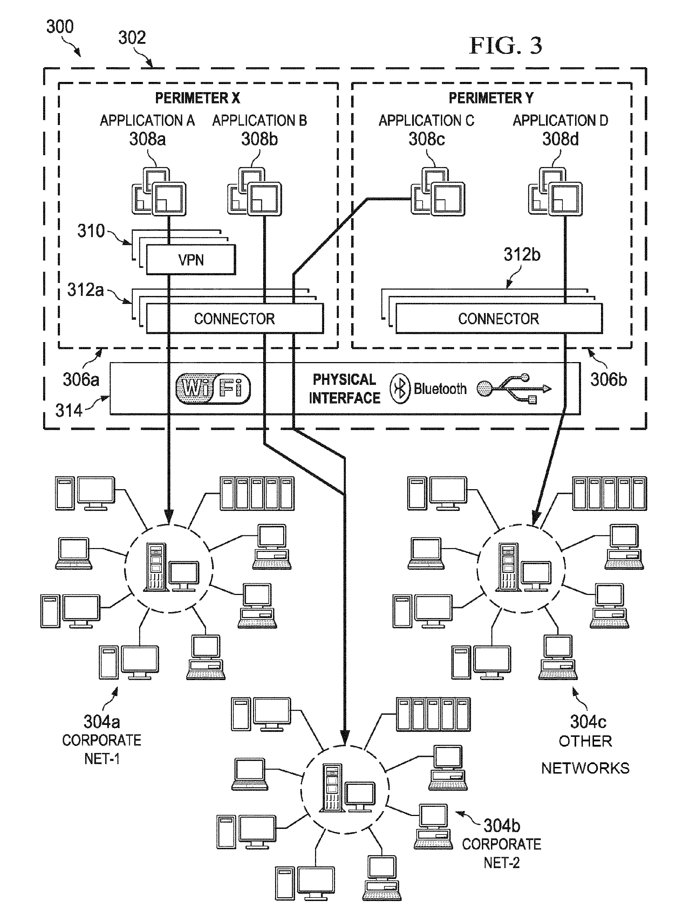

FIG. 3 is a schematic diagram showing example uses of network resources by a mobile device. The example uses shown in FIG. 3 may occur at different times, or they may occur concurrently. In the example shown, the device 302 is configured to communicate with corporate networks 304a and 304b and a non-corporate network 304c. The corporate networks 304a and 304b can include a virtual private network of an enterprise, a private Wi-Fi network of an enterprise, a wired network of the enterprise, or another network that is administered by the enterprise. The non-corporate network can include, for example, a publicly-accessible Wi-Fi network, a cellular data network, a personal wireless network, or another type of network. The device 302 includes an enterprise perimeter 306a and a personal perimeter 306b. The enterprise perimeter 306a includes the enterprise applications 308a and 308b, and the personal perimeter 306b includes the personal applications 308c and 308d. The enterprise perimeter 306a includes virtual private network data 310 and enterprise connection data 312a. The personal perimeter includes other connection data 312b.

The device 302 can access the corporate networks 304a and 304b using the network resources of the enterprise perimeter 306a, and the device can access the non-corporate network 304c using the network resources of the personal perimeter 306b. Each of the networks 304a, 304b, and 304c may, in some cases, provide access to other systems. For example, one or more of the networks 304a, 304b, and 304c may provide Internet access for the device 302. Some networks may only provide access to specific servers, databases, or systems. For example, the corporate network 304a may provide access only to corporate e-mail servers. The device 302 may be connected to any of the networks 304a, 304b, and 304c through any suitable component or components of the physical interface 314. The connection hardware may include, for example, a Wi-Fi connection, a cellular connection, Bluetooth, Universal Serial Bus (USB), Radio Frequency Identification (RFID), Near Field Communication (NFC), or other connection technologies.

The virtual private network data 310 provides secure connectivity with the corporate network 304a. In the example shown in FIG. 3, the virtual private network data 310 are used to route enterprise data traffic for the enterprise application 308a to the corporate network 304a. The enterprise connection data 312a in the enterprise perimeter 306a provides connectivity with the corporate network 304b, and the other connection data 312b in the personal perimeter 306b provides connectivity with other networks 304c. In the example shown in FIG. 3, the enterprise connection data 312a are used to route enterprise data traffic for the enterprise application 308b to the corporate network 304b, and enterprise connection data 312a are also used to route personal data traffic for the personal application 308c to the corporate network 304b. For example, the personal application 308c may be a web-based application (*e.g.*, online game, social networking application) that accesses the Internet through the corporate network 304b. As shown in FIG. 3, the other connection data 312b are used to route personal data traffic for the personal application 308d to the other networks 304c.

In some implementations, the connection data 312a and 312b may include encryption information, network settings and information, passwords, certificates, and other data. Each perimeter may include a policy for applications and network resources within the perimeter, outside the perimeter, or both. In some cases, the device 302 includes a policy that allows personal applications in the personal perimeter 306b to access the corporate networks 304a and 304b. A user of the device may indicate whether to prevent the personal applications from accessing the corporate networks 304a and 304b. In some instances, the personal applications 308c and 308d are prohibited from accessing the corporate networks 304a and 304b based on the user's indication. In some instances, the personal applications 308c and 308d are allowed to access the corporate networks 304a and 304b based on the user's indication.

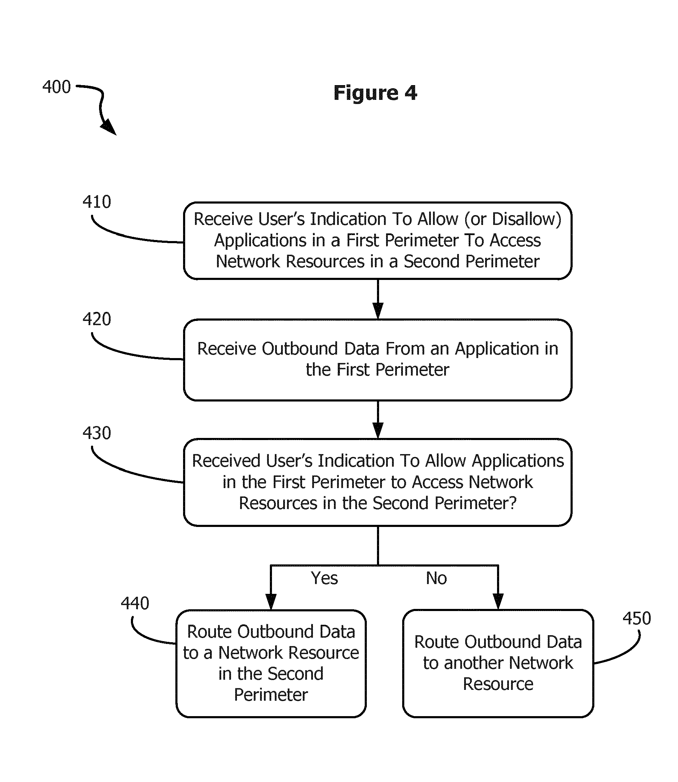

FIG. 4 is a flow chart showing an example process 400 for managing use of network resources on a mobile device. The process 400 can be implemented by a user device in a communication system. For example, the process 400 can be implemented by the device 102 shown in FIG. 1, the device 200 shown in FIG. 2, the device 302 shown in FIG. 3, or by another type of system or module. The example process 400 shown in FIG. 4 can be implemented using additional, fewer, or different operations, which can be performed in the order shown or in a different order. In some implementations, one or more of the operations can be repeated or iterated, for example, until a terminating condition is reached.

The process 400 can be implemented on a user device that includes multiple perimeters. For example, the example operations in the process 400 are described with respect to a first perimeter and a second perimeter. The perimeters can be defined and implemented in any suitable manner, and each perimeter may include any suitable data, applications, policies, and other resources. Each perimeter may include its own policy or other data that defines rules for accessing resources associated with the perimeter. For example, a first perimeter on the device may include a first policy that defines rules for accessing resources (*e.g.*, applications, data, network resources, etc.) associated with the first perimeter, and the second perimeter may include a second policy that defines rules for accessing resources (*e.g.*, applications, data, network resources, etc.) associated with the second perimeter. A device may include any suitable number of perimeters (*e.g*., 1, 2, 3, 4, or more).

In some implementations, the user device includes a personal perimeter associated with a user of the device. A device may include multiple personal perimeters, and each personal perimeter can be associated with the same user, or they may each be associated with different users. For example, multiple users may be authorized to use the device, and each user may have his or her own personal perimeter on the device. In some implementations, the user device includes an enterprise perimeter associated with an enterprise (*e.g.*, business, corporation, partnership, or other enterprise). For example, the enterprise may own the device and assign the device to a particular user. An enterprise administrator may setup the device policies or configure the device for enterprise use. In some instances, the user device includes multiple enterprise perimeters. Each enterprise perimeter can be associated with the same enterprise, or they may each be associated with different enterprises. For example, the user may own the device and have perimeters for each enterprise he or she is associated with.

At 410, the device receives a user's indication to allow applications in a first perimeter to access network resources in a second perimeter; alternatively, the device may receive a user's indication to disallow applications in a first perimeter from accessing network resources in a second perimeter. The first perimeter on the device may include multiple applications, and the second perimeter on the device may include multiple network resources. The user's indication can be an indication to allow any application in the first perimeter to access any network resource in the second perimeter. Or the user's indication can be an indication not to allow any application in the first perimeter to access any network resource in the second perimeter. As such, the user may or may not indicate a particular application or a particular network resource. Instead, the user can indicate generally that none of the applications in the first perimeter is permitted to access network resources associated with the second perimeter, or the user can indicate generally that all of the applications in the first perimeter are permitted to access network resources associated with the second perimeter.

The applications in the first perimeter may include any suitable applications (*e.g.*, calendar, e-mail, games, tools, etc.). The network resources in the second perimeter may include any suitable network resources (*e.g.*, virtual private network account, Wi-Fi access data, etc.). In cases where the first perimeter is a personal perimeter and the second perimeter is an enterprise perimeter, the user's indication can be an indication to allow or disallow personal data traffic to be routed on an enterprise network.

The user's indication can be obtained in any suitable manner. In some cases, the user's indication is obtained in response to the device determining that the second perimeter allows the applications in the first perimeter to access the network resource in the second perimeter. For example, the second perimeter may include a policy that allows other perimeters to access network resources of the second perimeter. In cases where the first perimeter is a personal perimeter and the second perimeter is an enterprise perimeter, the device may determine that an enterprise policy allows a user to route her or his personal data traffic on the enterprise network. In some cases, the user's indication is obtained through a user interface presented to the user. For example, a user interface may provide the user the option to select whether to allow applications in the first perimeter to access network resource in the second perimeter, and the user's indication received at 410 can be the user selection that is received through the user interface.

At 420, outbound data are received from an application in the first perimeter. The outbound data can be received from any application in the first perimeter. The outbound data can include any suitable information to be sent from the device. The outbound data may include addressing or routing information. For example, the outbound data may include a header with an IP address, an e-mail address, a uniform resource locator (URL), a memory or hardware address, or any suitable combination of one or more of these. In some instances, the outbound data is an e-mail from an e-mail application in the first perimeter. In some instances, the outbound data is a URL from a browser application in the first perimeter. In some instances, the outbound data is application-specific data from an internet application in the first perimeter. The outbound data can be received internally on the user device, and the outbound data can be designated for transmission to an external target destination.

At 430, it is determined whether the user indicated to allow applications in the first perimeter to access network resources in the second perimeter. The determination can be made by accessing one or more policies of the device. If the device has received the user's indication to allow applications in the first perimeter to access network resources in the second perimeter, the example process 400 proceeds to 440. In some cases, if the device has not received the user's indication to allow applications in the first perimeter to access network resources in the second perimeter, the process 400 proceeds to 450. If the device has received the user's indication to disallow applications in the first perimeter from accessing network resources in the second perimeter, the example process 400 proceeds to 450. In some implementations, the process 400 may proceed in a different manner, or the process may proceed based on additional or different information. For example, if none of the network resources in the second perimeter is available, the process 400 may proceed to 450 regardless of the user's indication.

At 440, the outbound data are routed to a network resource in the second perimeter. In cases where the second perimeter includes multiple network resources, the outbound data can be routed to any suitable network resource in the second perimeter. When multiple network resources in the second perimeter are available, a particular network may be selected. For example, the particular network resource can be selected based on a policy of the first perimeter, a policy of the second perimeter, user settings, network settings, network traffic, or other considerations. As an example, the outbound data can be routed to a virtual private network associated with the second perimeter, to a wireless (or wired) local area network associated with the second perimeter, to an ad hoc network associated with the second perimeter, to a cellular network associated with the second perimeter, or to another type of network resource.

At 450, the outbound data are routed to another network resource that is not in the second perimeter. For example, the outbound data may be routed to a network resource in the first perimeter or to another perimeter. When multiple network resources outside of the second perimeter are available, a particular network may be selected. For example, the particular network resource can be selected based on a policy of the first perimeter, a policy of another perimeter, user settings, network settings, network traffic, or other considerations. As an example, the outbound data can be routed to a virtual private network associated with the first perimeter, to a wireless (or wired) local area network associated with the first perimeter, to an ad hoc network associated with the first perimeter, to a cellular network associated with the first perimeter, to a network resource associated with another perimeter (*e.g.*, a third or fourth perimeter), or to another type of network resource.

In some cases, routing the outbound data does not directly depend on availability of network resources. The decision to route outbound data away from the network resources of the second perimeter may be made independent of network availability. For example, outbound data can be routed to a network resource outside of the second perimeter even though network resources in the second perimeter are available (*e.g.*, while the device is connected to a network associated with the second perimeter). As another example, outbound data can be routed to a network resource outside of the second perimeter even when no network resources outside of the second perimeter are currently available. In such instances, the outbound data can be held until another network resource is available. Accordingly, in some instances the user's indication to disallow applications in the first perimeter to access network resources in the second perimeter can override other considerations. For example, the process 400 may result in the device routing data based on who owns or operates a particular network resource, rather than on the speed and availability of the network. Such routing can, in some instances, give the user flexibility to control whether a particular network resource provider (*e.g.*, an employer or customer) has access to data from particular perimeters (*e.g.*, a personal perimeter) on the user device. Such routing may also allow the user to control data traffic without altering (*e.g.*, disconnecting) connectivity with corporate networks.

At 440 or at 450 (or both), the user device may perform all operations for routing the outbound data. In some cases, the user device routes the outbound data by adding or modifying routing information in the outbound data, or the user device may route the outbound data by adding a header or additional addressing information to the outbound data. Routing the outbound data may or may not include transmitting the outbound data from the user device. In some implementations, routing the outbound data includes transmitting the outbound data to an external communication system (*e.g.*, an enterprise network, a cellular data service provider).

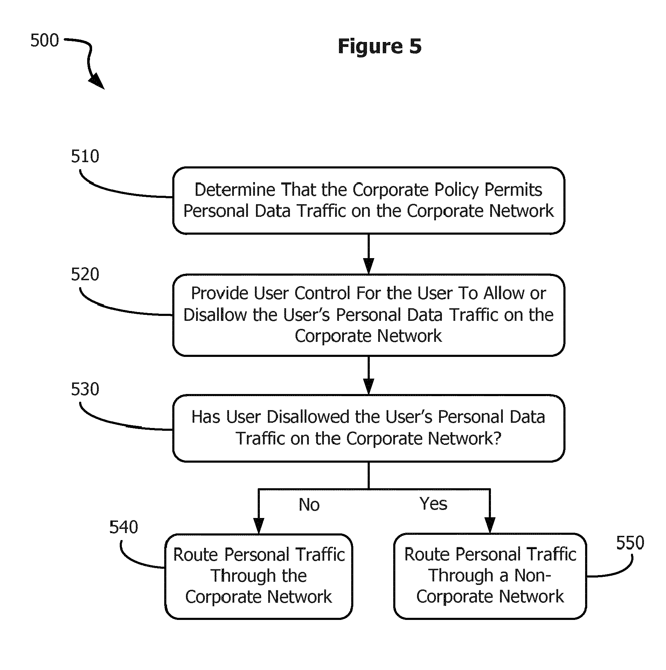

FIG. 5 is a flow chart showing an example process 500 for managing use of corporate network resources on a mobile device. The process 500 can be implemented by a user device in a communication system. For example, the process 500 can be implemented by the device 102 shown in FIG. 1, the device 200 shown in FIG. 2, the device 302 shown in FIG. 3, or by another type of system or module. The example process 500 shown in FIG. 5 can be implemented using additional, fewer, or different operations, which can be performed in the order shown or in a different order. In some implementations, one or more of the operations can be repeated or iterated, for example, until a terminating condition is reached.

The process 500 can be implemented in any appropriate context. In some implementations, the process 500 is implemented on a device that is used for both personal use and business use. For example, the process 500 can be implemented on a device that has been issued to an employee by an employer, and the employer may permit the employee to use the device for both business use (*e.g.*, for activities related to employment) and personal use (*e.g.*, for activities not related to employment). Business use may include, for example, using a corporate e-mail account, using corporate software applications, using a corporate calendar, accessing a corporate database or other corporate resources. Personal user may include, for example, using a personal e-mail account, using personal software applications, using a personal calendar, accessing the Internet or personal resources. In some examples, the process 500 can be implemented on a user's personally-owned device that has been configured for both business and personal use. In some instances, the process 500 can be implemented on a device that has been configured for personal use by multiple different users, for use business use with multiple different enterprises, or any suitable combination. In some cases, the device includes one or more personal perimeters and one or more corporate perimeters.

At 510, it is determined that a corporate policy permits personal data traffic on the corporate network. For example, a corporate administrator can implement or modify a corporate policy that permits a device to use the corporate network for personal data traffic. The policy may specify a particular set of applications or other resources that can use the corporate network resources; the policy may indicate generally that there are no restrictions on how the device may use corporate network resource; or the policy may permit personal data traffic on the corporate network in another suitable manner. The policy may specify a particular set of corporate network resources that can be used for personal traffic; the policy may indicate generally that there are no restrictions on the use of corporate network resources; or the policy may permit personal data traffic on the corporate network in another suitable manner.

Personal applications may generally include any personal software, modules, applications, data, or other personal resources on the device. In some instances, personal applications include a personal e-mail account, a personal e-mail software, a personal calendar application, web-based applications for personal use, games, tools, and others. Personal applications may be designated as personal applications (*e.g.*, as part of a personal perimeter on the device) that are associated with a particular user. In addition to personal applications, the device may also include corporate applications. In some instances, corporate applications include a corporate e-mail account, a corporate e-mail software, a corporate calendar application, web-based applications for corporate use, tools, and others. Corporate applications may be designated as corporate applications (*e.g.*, as part of a corporate perimeter on the device) that are associated with a particular enterprise.

Corporate network resources may generally include any corporate network, network connectivity hardware or software, corporate network access data or network accounts, or other types of corporate network resources. In some instances, corporate network resources include a corporate virtual private network (VPN), a corporate wireless network, corporate network hardware, corporate network software modules, and others. Network resources may be designated as corporate network resources (*e.g.*, as part of a corporate perimeter on the device) that are associated with a particular entity. In addition to corporate network resources, the device may also include additional network resources. In some instances, the device may include software, hardware, configuration data, or access settings for a personal wireless local area network, a personal cellular data account, a personal short-range wireless device (*e.g.*, Bluetooth devices), a public ad hoc network, etc. Network resources may be designated as personal network resources (e.g., as part of a personal perimeter on the device) that are associated with a particular user.

At 520, a user control is provided for the user to allow or disallow the user's personal data traffic to be carried on the corporate network. The user control may be provided in a graphical user interface, for example, on a touchscreen or another type of display, or the user control can be provided in any other suitable manner. The user control can be provided as part of a settings or configurations menu that the user can access at any time during operation of the device. Additionally or alternatively, the user control can be provided as part of an initial device configuration setup of the device.

The user can make a selection through the user control. The user can provide his or her selection, for example, by interacting with a touchscreen, by a keystroke, or by any other suitable action. The user interface can detect the user's selection and process the detected information. For example, the user's selection can be converted to any suitable format (*e.g.*, binary, etc.); information representing the user's selection can be stored, processed, communicated, etc. In some instances, the user's selection is stored in memory and retrieved by a processor, for example, at a later time.

In some cases, the device can provide feedback to the user in response to the user's selection. For example, the device may provide a confirmation message or a warning about security or other implications of the user's selection. In some instances, the device may inform the user that the user has indicated to allow personal data to be carried by the enterprise network, and the device may warn the user that the user's personal data traffic may be visible to enterprise administrators or personnel. In some instances, the device may inform the user that the user has indicated not to allow personal data to be carried by the enterprise network, and the device may warn the user that network availability for the user's personal data traffic may be limited due to the user's selection. Additional or different types of feedback may be provided to the user, as appropriate.

At 530, it is determined whether the user has disallowed the user's personal data traffic to be transmitted over the corporate network. The determination can be made by accessing one or more policies of the device. The determination at 530 can be based on a user selection received at 520; or the determination can be made based on additional or different information. If the user has disallowed the user's personal data traffic on the corporate network, the example process 500 proceeds to 550. In some cases, if the user has not allowed the user's personal data traffic on the corporate network, the process 500 may proceed to 550. If the user has not disallowed the user's personal data traffic on the corporate network, the example process 500 proceeds to 540. In some implementations, the process 500 may proceed in a different manner. For example, if none of the corporate network resources is available, the process 500 may proceed to 550 regardless of the user's indication.

Personal data traffic may include any data traffic designated as personal to the user. In some cases, personal data traffic includes information relating to, generated by, or directed to a personal application on the mobile device. Personal data traffic may include personal files or data stored on the mobile device, such personal files or data may or may not be associated with a personal application. In some instances, personal data traffic includes all non-corporate data traffic. Personal data traffic may include any data traffic on the device that relates to a personal perimeter or policy on the device.

Personal data traffic may include inbound and outbound data. For example, personal data traffic may include information requested by the device or retrieved to the device by a personal application; and personal data traffic may include information from a personal application to be transmitted from the device. Inbound and outbound personal data traffic may be routed through a corporate network, or they may be routed through a non-corporate network.

At 540, personal data traffic is routed through the corporate network. The personal data traffic may be routed through the corporate network by any suitable technique. In some cases, routing data through the corporate network is accomplished by designating outbound data to be transmitted over a virtual private network of the corporate enterprise, by designating outbound data to be transmitted over a wireless network of the corporate enterprise, by designating outbound data to be transmitted using a wireless account or wireless device associated with the corporate enterprise, etc.

Routing data may include appending or modifying a header of a data packet, adding or modifying addressing or routing data of a message, or other operations. In some instances, all of the operations required to route the data to a particular network can be performed by the user device. In some cases, routing the data may or may not include transmitting the data from the device, for example, using a wired or wireless connection.

At 550, personal data traffic is routed through a non-corporate network. The non-corporate network can be a personal network or another type of data network. The personal data traffic may be routed through the non-corporate network by any suitable technique. In some cases, routing data through the non-corporate network is accomplished by designating outbound data to be transmitted over a public network, by designating outbound data to be transmitted over a personal wireless network, by designating outbound data to be transmitted using a personal wireless account or personal wireless device, etc.

In some instances, personal data traffic is routed through a non-corporate network even when a corporate network is available and actively being used by the device for corporate data traffic. As such, personal data traffic can be routed through a non-corporate network without disconnecting from the corporate network. In other words, in some implementations the device routes data traffic based on the type of data traffic, rather than network availability. For instance, personal data traffic can be routed through non-corporate communication channels, and corporate data traffic can be routed through corporate communication channels. Such segregation may allow a user more privacy for personal data traffic, while also allowing use of corporate resources for corporate data traffic. Added flexibility for the user may be provided by a user control that allows the user to choose whether data traffic will be segregated in this manner.

In a general aspect, use of network resources on a device is managed. The network usage may be managed based on user input received at the device.

In some aspects, an indication is received from user input at the device. The indication indicates whether to allow an application associated with a first perimeter on the device to access a network resource associated with a second perimeter on the device. Outbound data are received from the application associated with the first perimeter. It is determined, according to the indication from the user input, whether to route the outbound data to the network resource associated with the second perimeter.

Implementations of these and other aspects may include one or more of the following features. The first perimeter includes multiple applications, data, and network resources. The second perimeter includes multiple applications, data, and network resources. The indication comprises an indication to allow any application associated with the first perimeter to access any network resource associated with the second perimeter, and the outbound data are routed to one of the network resources associated with the second perimeter. The indication comprises an indication not to allow any application associated with the first perimeter to access any network resource associated with the second perimeter, and the outbound data are routed to a network resource associated with the first perimeter. The outbound data are routed to a network resource associated with the first perimeter while the network resource associated with the second perimeter is available to applications associated with the second perimeter.

Additionally or alternatively, implementations of these and other aspects may include one or more of the following features. In response to determining that the second perimeter includes a policy that allows the application associated with the first perimeter to access the network resource associated with the second perimeter, a user interface is presented on the device. The user interface allows a selection whether to allow the application associated with the first perimeter to access the network resource associated with the second perimeter. The indication includes a user selection received through the user interface.

Additionally or alternatively, implementations of these and other aspects may include one or more of the following features. The first perimeter includes a first policy that defines rules for accessing resources associated with the first perimeter. The second perimeter includes a second policy that defines rules for accessing resources associated with the second perimeter. The first perimeter is a personal perimeter associated with a user of the device. The second perimeter is an enterprise perimeter associated with an enterprise. The indication is an indication whether to allow data from the personal perimeter to be transmitted over an enterprise communication system. The enterprise communication system includes a virtual private network of the enterprise, a wireless local area network of the enterprise, or both.

A number of implementations have been described. Nevertheless, it will be understood that various modifications may be made. Other variations in the order of steps are also possible. Accordingly, other implementations are within the scope of the following claims.

## Claims

1. A method of managing use of network resources on a device, the method comprising:
receiving, from user input received at the device, an indication whether to allow an application associated with a first perimeter on the device to access a network resource associated with a second perimeter on the device;
receiving outbound data from the application associated with the first perimeter; and
determining, according to the indication from the user input, whether to route the outbound data to the network resource associated with the second perimeter.

2. The method of claim 1, wherein the first perimeter includes multiple applications, the second perimeter includes multiple network resources, the indication comprises an indication to allow any application associated with the first perimeter to access any network resource associated with the second perimeter, and the method further comprises routing the outbound data to one of the network resources associated with the second perimeter.

3. The method of claim 1, wherein the first perimeter includes multiple applications, the second perimeter includes multiple network resources, the indication comprises an indication not to allow any application associated with the first perimeter to access any network resource associated with the second perimeter, and the method further comprises routing the outbound data to a network resource associated with the first perimeter.

4. The method of claim 1, wherein it is determined, according to the indication, not to route the outbound data to the network resource associated with the second perimeter, and the method further comprises routing the outbound data to a network resource associated with the first perimeter while the network resource associated with the second perimeter is available to applications associated with the second perimeter.

5. The method of claim 1, further comprising:
determining that the second perimeter includes a policy that allows the application associated with the first perimeter to access the network resource associated with the second perimeter; and
presenting, on the device, a user interface that allows a selection whether to allow the application associated with the first perimeter to access the network resource associated with the second perimeter, wherein the indication comprises a user selection received through the user interface.

6. The method of claim 1, wherein the first perimeter includes a first policy that defines rules for accessing resources associated with the first perimeter, and the second perimeter includes a second policy that defines rules for accessing resources associated with the second perimeter.

7. The method of claim 1, wherein the first perimeter comprises a personal perimeter associated with a user of the device, and the second perimeter comprises an enterprise perimeter associated with an enterprise, and the indication comprises an indication whether to allow data associated with the personal perimeter to be transmitted over an enterprise communication system.

8. The method of claim 7, wherein the enterprise communication system includes at least one of a virtual private network of the enterprise or a wireless local area network of the enterprise.

9. A device comprising:
a first perimeter that includes an application;
a second perimeter that includes a network resource;
a user interface operable to receive an indication whether to allow the application associated with the first perimeter to access the network resource associated with the second perimeter; and
data processing apparatus operable to:
receive outbound data from the application associated with the first perimeter; and
determine, according to the indication, whether to route the outbound data to the network resource associated with the second perimeter.

10. The device of claim 9, wherein the first perimeter includes multiple applications, the second perimeter includes multiple network resources, the indication comprises an indication to allow any application associated with the first perimeter to access any network resource associated with the second perimeter, and the data processing apparatus is operable to route the outbound data to one of the network resources associated with the second perimeter in response to the determination according to the indication.

11. The device of claim 9, wherein the first perimeter includes multiple applications, the second perimeter includes multiple network resources, the indication comprises an indication not to allow any application associated with the first perimeter to access any network resource associated with the second perimeter, and the data processing apparatus is operable to route the outbound data to a network resource associated with the first perimeter in response to the determination according to the indication.

12. The device of claim 9, wherein the data processing apparatus is operable to:
determine, according to the indication, not to route the outbound data to the network resource associated with the second perimeter; and
in response to the determination, route the outbound data to a network resource associated with the first perimeter while the network resource associated with the second perimeter is available to applications associated with the second perimeter.

13. The device of claim 9, wherein the data processing apparatus is operable to determine that the second perimeter includes a policy that allows the application associated with the first perimeter to access the network resource associated with the second perimeter, and the user interface comprises a graphical user interface that allows a selection whether to allow the application associated with the first perimeter to access the network resource associated with the second perimeter.

14. The device of claim 9, wherein the first perimeter comprises a personal perimeter associated with a user of the device, and the second perimeter comprises an enterprise perimeter associated with an enterprise, and the indication comprises an indication whether to allow data from the personal perimeter to be transmitted over an enterprise communication system.

15. The device of claim 14, further comprising a communication interface operable to communicate with the enterprise communication system.
